# EUROPÄISCHE PATENTSCHRIFT

(11) **EP 3 086 988 B1**
(45) Veröffentlichungstag und Bekanntmachung des Hinweises auf die Patenterteilung: **27.09.2017**
(21) Anmeldenummer: 14824835.4
(22) Anmeldetag: 19.12.2014
(51) Int. Cl.: B60T 17/08, F16D 65/14

(54) **FEDERSPEICHERBREMSZYLINDER MIT NOTLÖSEEINRICHTUNG**
SPRING BRAKE CYLINDER WITH EMERGENCY RELEASE DEVICE
CYLINDRE DE FREIN À RESSORT ACCUMULATEUR AVEC DISPOSITIF DE DESSERRAGE D'URGENCE

(30) Priorität: 27.12.2013 DE 102013114897
(43) Veröffentlichungstag der Anmeldung: 02.11.2016
(73) Patentinhaber: KNORR-BREMSE Systeme für Nutzfahrzeuge GmbH, 80809 München (DE)
(72) Erfinder: HERICHER, Stephane, F-14670 Basseneville (FR)
(86) Internationale Anmeldenummer: PCT/EP2014/078627
(87) Internationale Veröffentlichungsnummer: WO 2015/097072

(56) Entgegenhaltungen:
- EP-A1- 2 353 954
- WO-A1-02/44004
- WO-A1-2008/027019
- WO-A1-2008/027020
- CN-A- 102 410 322
- DE-A1-102007 008 730
- DE-A1-102007 041 769
- FR-A1- 2 128 048
- FR-A1- 2 259 288
- US-A- 5 632 192
- US-A1- 2006 131 116

## Beschreibung

Die Erfindung geht aus einem pneumatischen Federspeicherbremszylinder für Bremsanlagen von Fahrzeugen, gemäß dem Oberbegriff von Anspruch 1. Ein gattungsgemäßer pneumatischer Federspeicherbremszylinder ist aus WO 02/44004 A1 bekannt.

Ein derartiger Federspeicherbremszylinder weist üblicherweise ein Gehäuse auf, in welchem ein Federspeicherbremskolben geführt ist, der den Innenraum des Gehäuses in eine Federspeicherkammer und einen Druckraum unterteilt. In der Federspeicherkammer ist eine Federeinrichtung angeordnet, die den Federspeicherbremskolben in Richtung zum Druckraum vorspannt. Damit ein abgestelltes bzw. gebremstes Fahrzeug, in welchem der Federspeicherbremszylinder angeordnet ist, bewegt werden kann, wird der Druckraum derart mit Druckluft beaufschlagt, dass der Federspeicherbremskolben entgegen der Vorspannungswirkung der Speicherfeder verschoben wird. Dadurch gelangt eine mit dem Federspeicherbremskolben gekoppelte Bremseinrichtung außer Eingriff mit einer Bremsscheibe, so dass das Fahrzeug nicht weiter gebremst ist. Für Bremsbetätigungen während der Fahrt kann ein derartiger Federspeicherbremszylinder in bekannter Weise mit einem Betriebsbremszylinder in Form eines sog. Kombizylinders gekoppelt sein.

Bei kombinierten Betriebsbrems- und Federspeicherbremszylindern (Kombizylinder) betätigt der Federspeicherbremskolben im Parkbremsfall mit seinem Federspeicherbremskolbenrohr einen Betriebsbremskolben des Betriebsbremszylinders, welcher wiederum eine Betriebsbremskolbenstange aufweist, die mit einem Bremsmechanismus der Fahrzeugbremse, insbesondere einer Scheibenbremse zusammen wirkt. Ein solcher Bremsmechanismus ist beispielsweise in der EP 0 740 085 B1 beschrieben und weist einen mit der Betriebsbremskolbenstange gelenkig verbundenen Schwenkhebel auf, welcher mit einer Zuspannwelle drehfest verbunden ist, die mit einer Nockenkontur versehen ist, die bei einem Verdrehen der Zuspannwelle um ihre Längsachse zu einer axialen Relativbewegung eines Bremssattels und einer Bremsbacke einer Scheibenbremse führt.

Kommt es nun aufgrund eines Druckabfalls im System zu einer wesentlichen Reduzierung des Luftdrucks im Druckraum, so wird der Federspeicherbremskolben aufgrund der Vorspannung der Speicherfeder derart in Richtung zum Druckraum verschoben, dass die mit dem Federspeicherbremskolben gekoppelte Bremseinrichtung greift und eine Bremsung des Fahrzeugs ausführt. Damit soll beispielsweise bei einem Leitungsabriss der Bremsdruckleitung während der Fahrt zuverlässig verhindert werden, dass ein Nutzfahrzeug ungebremst weiterfährt und somit schwer kontrollierbar wird.

Diese Zwangsbremsung bei mangelnder Druckluftzufuhr wird zudem auch bei über längere Zeit abgestellten Anhängern etc. genutzt, damit ein unbeabsichtigtes Wegrollen dieser Fahrzeuge verhindert werden kann.

Die somit durch die mechanische Speicherfeder im Federspeicherbremszylinder in derartigen Fällen ausgeübte Bremswirkung soll jedoch beispielsweise zum Verschieben abgestellter Fahrzeuge oder zum Räumen einer aufgrund einer Panne blockierten Fahrspur wieder gelöst werden können, damit die betreffenden Fahrzeuge bewegt und z.B. Verkehrsbehinderungen aufgehoben werden können.

Da die vorhandene Druckluftversorgung hierbei jedoch manchmal durch Leitungsabriss etc. beschädigt ist und nicht eingesetzt werden kann und auch keine ergänzende Druckluftversorgung vorhanden ist, ist es in der Praxis erforderlich, dass derartige Federspeicherbremszylinder eine mechanische Notlöseeinrichtung aufweisen. Diese ist üblicherweise mit einer Betätigungseinrichtung in Gestalt einer Gewindespindel versehen, die von außen zugänglich und drehbar betätigbar ist. Diese Gewindespindel ist in einer Buchse im Boden des Federspeicherbremszylinders drehbar bzw. verschraubbar gehalten und wirkt, wie in der WO 97/07322 A1 beschrieben, mit einer im Federspeicherbremskolbenrohr drehfest gehaltenen Mutter zusammen, so dass eine Drehung der Gewindespindel eine lineare Verschiebung der Mutter auf der Gewindespindel bewirkt.

Hierbei ist bei dieser konkreten Ausführungsform das nach außen weisende Ende des Federspeicherbremskolbenrohrs mit einem nach innen ragenden Flansch versehen, welcher als Anschlag für die Mutter wirkt. Aufgrund der durch die Drehbewegung der Gewindespindel eingeleiteten linearen Versetzung der auf der Mutter verschraubten Gewindespindel in Axialrichtung schlägt die Mutter am Flansch des Federspeicherbremskolbenrohrs an, wobei es durch weitere Drehung der Gewindespindel zu einer ebenfalls linearen Verschiebung des Federspeicherkolbens entgegen der Vorspannkraft der Speicherfeder kommt, so dass hierdurch die mit dem Federspeicherkolben zusammenwirkende Bremseinrichtung notgelöst werden kann.

Wie in Fig.2 der WO 97/07322 A1 gezeigt, ist die Mutter durch einen Formschluss im Federspeicherbremskolbenrohr drehfest gehalten, wobei ein am Außenumfang der Mutter in Umfangsrichtung umlaufendes Außenmehrkantprofil, insbesondere ein Sechskantprofil und einem komplementär ausgebildeten Sechskantprofil am Innenumfang des Federspeicherbremskolbenrohrs formschlüssig zusammen wirkt.

Diese Bauweise hat sich hinsichtlich ihrer Funktionalität in der Praxis bewährt. Allerdings weist sie den Nachteil auf, dass es bei jedem durch Entlüften des Druckraums bedingten Zuspannen der Federspeicherbremse zu einer Gleitbewegung des Innensechskantprofils des Federspeicherbremskolbenrohrs gegenüber dem Außensechskantprofil der Mutter kommt. Weil die Materialien der Mutter und des Federspeicherbremskolbenrohrs in der Regel nicht im Hinblick auf ihre Gleitverschleißeigenschaften ausgewählt werden, kann es bei einer solchen Gleitbewegung zu Materialabrieb kommen, wobei Späne in das Druckluftsystem gelangen und dieses schädigen können.

Bei einem aus WO 2010/031512 A1 bekannten kombinierten Betriebs- und Federspeicherbremskolben ist die Mutter der mechanischen Notlöseeinrichtung mittels eines zwischen der Innenwandung der Federspeicherbremskolbenrohr und dem Außenumfang der Mutter angeordneten Zwischenbuchse drehfest gehalten, wobei diese Zwischenbuchse mittels einer an deren zum Boden des Federspeicherbremszylinders weisenden Ende ausgebildeten nach radial außen weisenden Nase in einer Aussparung der Federspeicherbremskolbenstange drehfest festgelegt ist. Diese Nase zusammen mit der Aussparung als Verdrehsicherung nimmt jedoch axial wie radial relativ viel Bauraum ein.

Notlöseeinrichtungen sind auch in CN 102 410 322 A, DE 10 2007 041 769 A1, DE 10 2007 008 730 A1 und in EP 2 353 954 A1 offenbart.

Der vorliegenden Erfindung liegt demgegenüber die Aufgabe zugrunde, einen Federspeicherbremszylinder der eingangs erwähnten Art derart weiter zu entwickeln, dass die oben beschriebenen Nachteile vermieden werden.

Diese Aufgabe wird erfindungsgemäß durch die Merkmale von Anspruch 1 gelöst.

### Offenbarung der Erfindung

Die Erfindung sieht vor, dass der Formschluss einerseits zwischen einem am Außenumfang der Mutter in Umfangsrichtung umlaufenden Außenmehrkantprofil und einem komplementär ausgebildeten umlaufenden Innenmehrkantprofil am Innenumfang einer Zwischenbuchse und andererseits durch an dem Außenumfang der Zwischenbuchse in Umfangsrichtung umlaufendes Außenmehrkantprofil und einem komplementär ausgebildeten umlaufenden Innenmehrkantprofil am Innenumfang des Federspeicherbremskolbenrohrs gebildet wird.

Unter einem Mehrkantprofil soll ein Außen- oder Innenprofil verstanden werden, welches im Querschnitt gesehen mehrere Ecken oder Kanten aufweist, die durch beliebige Flächen, insbesondere gerade, konvexe oder konkave Flächen miteinander verbunden werden.

Dadurch kann zum einen das Material der Zwischenbuchse so gewählt werden, dass der Verschleiß aufgrund einer Relativgleitbewegung des Federspeicherbremskolbenrohrs gegenüber der Mutter reduziert wird. Vorzugsweise besteht die Zwischenbuchse aus Polyamid, insbesondere aus glasfaserverstärktem Polyamid, welches gute Gleiteigenschaften sowie eine hohe Steifigkeit und Festigkeit wegen der relativ hohen Torsions- und Schubbelastung aufweist, die durch die drehfest gehaltene Mutter eingeleitet wird. Alternativ könnte die Zwischenbuchse auch aus einem Metall bestehen.

Demgegenüber können die Materialien des Federspeicherbremskolbenrohrs bzw. des Federspeicherbremskolbens und/oder der Mutter unabhängig davon an andere Anforderungen wie beispielsweise hinsichtlich Steifigkeit oder Gewicht gewählt werden

Andererseits ermöglicht der Formschluss zwischen der Mutter und dem Federspeicherbremskolbenrohr mittels zweier Mehrkantprofile eine äußerst platzsparende Anordnung, weil solche Mehrkantprofile, vor allem bei einer größeren Anzahl von Kanten, im Wesentlichen einen zylindrischen Umfang einhüllen und sich dadurch in radialer Richtung nur geringfügig erstrecken. Dadurch kann die Wandstärke des Federspeicherbremskolbenrohrs vergleichsweise klein ausfallen.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt weist die Gewindespindel ein Außengewinde auf, welches mit einem Innengewinde einer in einem Boden des Gehäuses ausgebildeten Durchgangsbohrung zusammen wirkt, um die Gewindespindel in das Gehäuse ein- und auszuschrauben. Dazu kann beispielsweise in dem Boden des Gehäuses eine Buchse mit einem Innengewinde gehalten sein.

Alternativ könnte die Gewindespindel aber auch lediglich drehbar, aber axialfest in dem Boden des Gehäuses gehalten sein. Eine solche Lösung wird in der eingangs genannten WO 97/07322 A1 beschrieben. Dann ruft eine Drehung der Gewindespindel ebenfalls eine Verschraubung der drehfest gehaltenen Mutter und damit deren axiale Bewegung hervor.

Besonders bevorzugt wird das an dem Außenumfang der Zwischenbuchse in Umfangsrichtung umlaufende Außenmehrkantprofil und das komplementär ausgebildete umlaufende Innenmehrkantprofil am Innenumfang des Federspeicherbremskolbenrohrs durch ein Zwölfkantprofil gebildet. Bedingt durch die relativ hohe Anzahl von zwölf Kanten ist die radiale Ausdehnung des Profils relativ gering, was sich, wie oben bereits erwähnt positiv auf den Bauraum auswirkt.

Insbesondere kann das Zwölfkantprofil mit dem Federspeicherbremskolbenrohr einstückig ausgeführt sein. Dies ist vor allem dann von Vorteil, wenn das Federspeicherbremskolbenrohr mit dem Federspeicherbremskolben einstückig ausgeführt ist und einen Spritzgußformling z.B. aus Kunststoff oder Aluminium darstellt. Dann kann das Zwölfkantprofil zusammen mit dem Federspeicherbremskolben/Federspeicherbremskolbenrohr urgeformt werden.

Gemäß einer Weiterbildung kann das am Außenumfang der Mutter in Umfangsrichtung umlaufende Außenmehrkantprofil und das komplementär ausgebildete umlaufende Innenmehrkantprofil am Innenumfang der Zwischenbuchse durch ein Sechskantprofil gebildet werden. Dann kann beispielsweise eine handelsübliche Mutter mit Außensechskantprofil verwendet werden.

Die Zwischenbuchse kann in dem Federspeicherbremskolbenrohr axialfest gehalten sein, beispielsweise zwischen zwei axialen Anschlägen, von welchen ein Anschlag durch eine von einer Innenwandung des Federspeicherbremskolbenrohrs sich nach radial innen erstreckende Schulter und ein weiterer Anschlag durch eine im Federspeicherbremskolbenrohr festgelegte Scheibe gebildet wird. Insbesondere weist die Zwischenbuchse wenigstens eine axiale Länge auf, welche der maximalen Relativbewegung zwischen der Mutter und dem Federspeicherbremskolbenrohr entspricht, damit die Mutter in jeder Lage bzw. in jedem Schraubzustand drehfest gehalten ist. Mit anderen Worten weist die Zwischenbuchse wenigstens eine axiale Länge auf, welche dem axialen Schraubbereich der Mutter auf der Gewindespindel entspricht.

Besonders bevorzugt erstrecken sich das an dem Außenumfang der Zwischenbuchse in Umfangsrichtung umlaufende Außenmehrkantprofil und das komplementär ausgebildete umlaufende Innenmehrkantprofil am Innenumfang des Federspeicherbremskolbenrohrs sich im wesentlichen über die gesamte axiale Länge der Zwischenbuchse. Dann kann das von der Mutter auf die Zwischenbuchse wirkende Torsionsmoment bzw. Schubmoment auf eine relativ große Länge abgestützt werden.

Besonders bevorzugt wird der axiale Anschlag für die Mutter durch eine Scheibe gebildet, welche in dem Federspeicherbremskolbenrohr gehalten ist. Alternativ könnte der axiale Anschlag für die Mutter direkt am Federspeicherbremskolbenrohr einstückig ausgebildet sein, beispielsweise dadurch, dass an dem Federspeicherbremskolbenrohr eine sich von dessen Innenwandung nach radial innen erstreckende Schulter ausgebildet ist, die dann den axialen Anschlag für die Mutter bildet.

Die Erfindung betrifft auch einen kombinierten Betriebsbrems- und Federspeicherbremszylinder für Bremsanlagen von Fahrzeugen, mit einem oben beschriebenen Federspeicherbremszylinder nach einem der vorhergehenden Ansprüche.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung eines kombinierten Betriebsbrems- und Federspeicherbremszylinders mit einer Notlösevorrichtung gemäß einer bevorzugten Ausführungsform der Erfindung;
- Fig.2: eine Querschnittsdarstellung entlang der Linie II-II von Fig.1;
- Fig.3: eine perspektivische Ansicht des Federspeicherbremskolbens mit Kolbenrohr des kombinierten Betriebsbrems- und Federspeicherbremszylinders von Fig.1, dort gesehen von links.

### Beschreibung des Ausführungsbeispiels

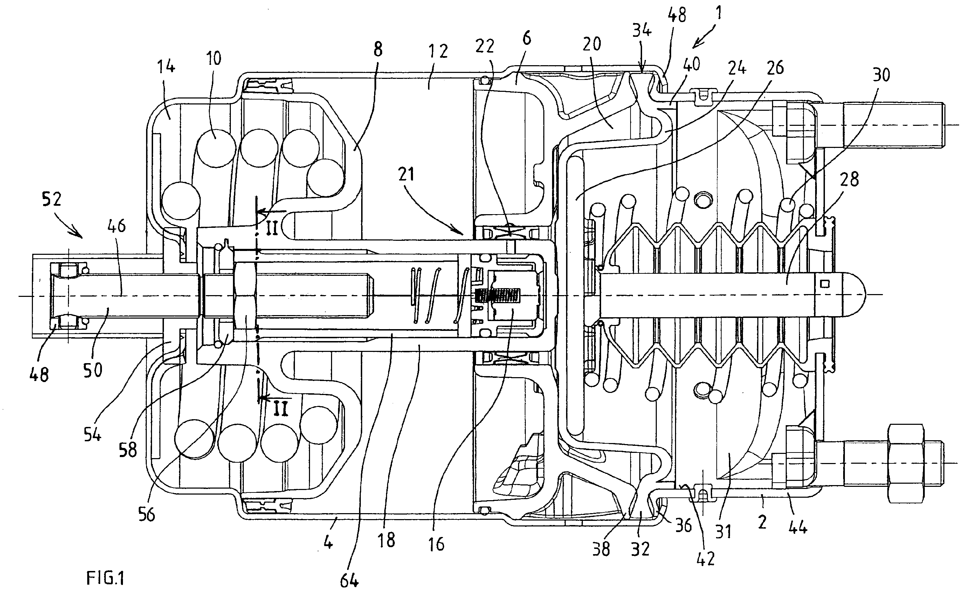

In Fig.1 ist ein kombinierter Betriebsbrems- und Federspeicherbremszylinder 1, nachfolgend Kombizylinder genannt, dargestellt. Der Kombizylinder 1 besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegengesetzten Seite am Boden des Federspeicherbremszylinders 4 ab. Zwischen dem Federspeicherbremskolben 8 und der Zwischenwand 6 ist eine Federspeicherbremskammer 12 ausgebildet, welche mit einem aus Maßstabsgründen nicht gezeigten Druckregelmodul in Verbindung steht, um diese zu belüften und zu entlüften. Bei Belüftung wird der Federspeicherbremskolben 8 unter Verspannung der Speicherfeder 10 axial in Lösestellung der Feststellbremse verschoben. Bei dieser Verschiebung des Federspeicherbremskolbens 8 wird die Luft, welche innerhalb der die Speicherfeder 10 aufnehmenden Federkammer 14 ansteht, über ein Entlüftungsventil 16 herausgedrückt. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einem hohlen Federspeicherbremskolbenrohr 18 verbunden, welches sich durch die Zwischenwand 6 in eine Betriebsbremskammer 20 des Betriebsbremszylinders 2 erstreckt. Der Federspeicherbremskolben 8 kann dem Federspeicherbremskolbenrohr 18 wie hier gezeigt einstückig ausgebildet sein oder aber Der Federspeicherbremskolben 8 und Federspeicherbremskolbenrohr 18 sind getrennte Teile, die miteinander verbunden sind. Auch der Federspeicherbremskolben 8 selbst kann mehrteilig ausgebildet sein.

In der Ausführungsform von Fig.1 ist das Federspeicherbremskolbenrohr 18 zum Betriebsbremszylinder 2 durch einen Boden verschlossen, der einstückig mit dem Federspeicherbremskolbenrohr 18 ausgeführt. Ist. Alternativ könnte das Federspeicherbremskolbenrohr 18 auch zum Betriebsbremszylinder 2 hin offen sein und der Boden des Federspeicherbremskolbenrohrs 18 durch einen dort aufgesetzten Deckel gebildet werden.

Eine in eine zentrale Bohrung 21 der Zwischenwand 6 eingesetzte Dichtungsanordnung 22 dichtet gegenüber der Außenwand der Federspeicherbremskolbenrohr 18 während deren Längsbewegung ab. In die Betriebsbremskammer 20 mündet ein nicht gezeigter Einlass, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegen gesetzter Seite ein Druckstück in Form eines steifen Membrantellers 26 vorgesehen ist. Genauer trennt die Membrane 24 die mit Druckmittel be- und entlastbare Betriebsbremskammer 20 des Betriebsbremszylinders 2 von einer eine am Membranteller 26 abgestützte Rückholfeder 30 aufnehmende Federkammer 31.

Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Die sich einerseits am Membranteller 26 und andererseits am Boden des Betriebsbremszylinders 2 abstützende Rückholfeder 30 sorgt dafür, dass die Druckstange 28 bei entlüfteter Betriebsbremskammer 20 in die Lösestellung zurückgeholt wird.

Ein radial äußerer Befestigungsrand 32 der Membrane 24 weist einen keilförmigen, sich nach radial innen hin verjüngenden Querschnitt auf. Dieser radial äußere Befestigungsrand 32 der Membrane 24 mit dem keilförmigen, sich nach radial innen verjüngenden Querschnitt ist in eine komplementär geformte Aufnahme 34 mit keilförmigem, sich nach radial außen erweiternden Querschnitt zwischen der Zwischenwand 6 und dem Betriebsbremszylinder 2 geklemmt. Die Zwischenwand 6 und der Betriebsbremszylinder 2 bilden ihre äußeren Ränder als nach radial außen abgebogene Flansche 36, 38 aus, deren gegeneinander weisende Innenflächen die Aufnahme 34 mit keilförmigem Querschnitt zwischen sich ausbilden.

Weiterhin ist an der Membrane 24 wenigstens ein sich in axialer Richtung erstreckender, in Bezug zum Befestigungsrand 32 nach radial innen versetzt angeordneter Zentrierring 40 ausgebildet, durch welchen sie gegen eine radial innere Umfangsfläche 42 einer Wandung 44 des Betriebsbremszylinders 2 zentrierbar ist. Besonders bevorzugt ist der Zentrierring 40 im Wesentlichen senkrecht zu einer Mittelebene des Befestigungsrandes 32 angeordnet und ragt beispielsweise einseitig von der Membrane 24 weg. Denkbar ist allerdings auch, dass anstatt dieses einen Zentrierrings 40 oder zusätzlich ein weiterer, in Richtung des Federspeicherbremszylinders 4 ragender und gegen die radial innere Umfangsfläche dessen Wandung zentrierender Zentrierring vorgesehen ist.

Die Gehäuse des Betriebsbremszylinders 2 und des Federspeicherbremszylinders 4 bestehen aus Gewichtsgründen beispielsweise aus Aluminium, während die Zwischenwand 6 beispielsweise aus Kunststoff gefertigt ist.

Gegenüber dem Gehäuse des Federspeicherbremszylinders 4 ist über eine Werkzeugansatzfläche 48, beispielsweise einem Außensechskant einer Sechskantmutter eine Gewindespindel 50 einer Notlösevorrichtung 52 verschraubbar. Hierzu ist die Sechskantmutter 48 mit einem Ende der Gewindespindel 50 drehfest verbunden.

In einer Durchgangsöffnung des Gehäuses des Federspeicherbremszylindergehäuses 4 ist ein Ringeinsatz in Form einer Buchse 54 gehalten, dessen zentrale Bohrung hier beispielsweise mit einem Innengewinde versehen ist, in welchem ein am Außenumfang der Gewindespindel 50 vorhandenes Außengewinde derart verschraubbar ist, dass die Gewindespindel 50 in das Gehäuse des Federspeicherbremszylinders 4 hinein- bzw. aus diesem herausgeschraubt werden kann.

Alternativ könnte die Gewindespindel 50 in der Buchse 54 bzw. im Boden des Federspeicherbremszylindergehäuses 4 auch lediglich drehbar und unverschraubbar, aber axialfest gehalten sein, so dass sie ihre axiale Position in Bezug zur Buchse 54 bzw. zum Federspeicherbremszylindergehäuse 4 auch bei Drehung nicht ändert. Im Eingriffsbereich der Gewindespindel 50 mit der Buchse 54 weisen dann die Gewindespindel 50 und die Buchse 54 keine zusammen wirkenden Gewindegänge auf, sondern Mittel zur axialfesten, aber drehbaren Lagerung der Gewindespindel 50 gegenüber der Buchse 54 bzw. gegenüber dem Federspeicherbremszylindergehäuse 4.

Im vorliegenden Fall wird die Federspeicherbremse vorzugsweise durch Herausschrauben der Gewindespindel 50 manuell notgelöst. Hierzu wird über ein Schraubwerkzeug eine Drehbewegung z.B. im Gegenuhrzeigersinn in die mit der Gewindespindel 50 drehfest verbundene Sechskantmutter 48 eingeleitet, wodurch die Speicherfeder 10 der Federspeicherbremse komprimiert und die Federspeicherbremse gelöst wird.

Hierzu ist die Gewindespindel 50 in einer im Federspeicherbremskolbenrohr 18 durch Formschluss drehfest gehaltenen Mutter 56 verschraubbar, die mit einem axialen Anschlag 58 am Federspeicherbremskolben 8 bzw. an der Federspeicherbremskolbenstange 18 zusammenwirkt, um eine Lösebewegung des Federspeicherbremskolbens 8 gegen die Wirkung der Speicherfeder 10 hervorzurufen.

Der Anschlag wird hier beispielsweise durch eine im Federspeicherbremskolbenrohr beispielsweise durch einen Sprengring festgelegte Scheibe 58 gebildet, gegen welche die Mutter 56 anlaufen und dadurch den Federspeicherbremskolben 8 bei weiterer Drehung der Gewindespindel 50 in Lösestellung bringen kann, wie in Fig.1 gezeigt ist. Diese Anordnung ist bei dem Ausführungsbeispiel von Fig.1 geeignet.

Bei dem oben beschriebenen alternativen Ausführungsform, bei welcher das Federspeicherbremskolbenrohr 18 zum Betriebsbremszylinder 2 hin zunächst offen und dann durch einen Deckel verschlossen ist, kann der axiale Anschlag auch durch eine vom Innendurchmesser des Federspeicherbremskolbenrohrs 18 nach innen vorspringende Schulter gebildet werden, die am Federspeicherbremskolbenrohr 18 einstückig angeformt ist.

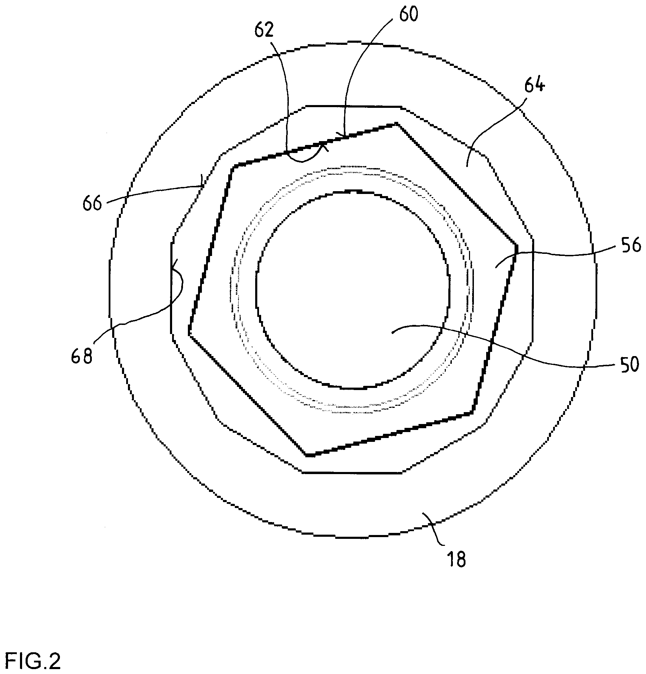

Die Mutter 56 ist im Federspeicherbremskolbenrohr 18 durch Formschluss drehfest gehalten. Wie Fig.2 zeigt, wird der Formschluss zur Drehsicherung der Mutter 56 innerhalb des Federspeicherbremskolbenrohrs 18 einerseits zwischen einem am Außenumfang der Mutter 56 in Umfangsrichtung umlaufenden Außenmehrkantprofil und einem komplementär ausgebildeten umlaufenden Innenmehrkantprofil 62 am Innenumfang einer Zwischenbuchse 64 und andererseits durch an dem Außenumfang der Zwischenbuchse 64 in Umfangsrichtung umlaufendes Außenmehrkantprofil 66 und einem komplementär ausgebildeten umlaufenden Innenmehrkantprofil 68 am Innenumfang des Federspeicherbremskolbenrohrs 18 gebildet. Die Zwischenbuchse 64 ist zumindest im axialen Schraubbereich der Mutter 56 auf der Gewindespindel 50 dem Federspeicherbremskolbenrohr 18 und der Mutter radial zwischengeordnet. Mit anderen Worten weist die Zwischenbuchse wenigstens eine axiale Länge auf, welche dem axialen Schraubbereich der Mutter 56 auf der Gewindespindel 50 entspricht.

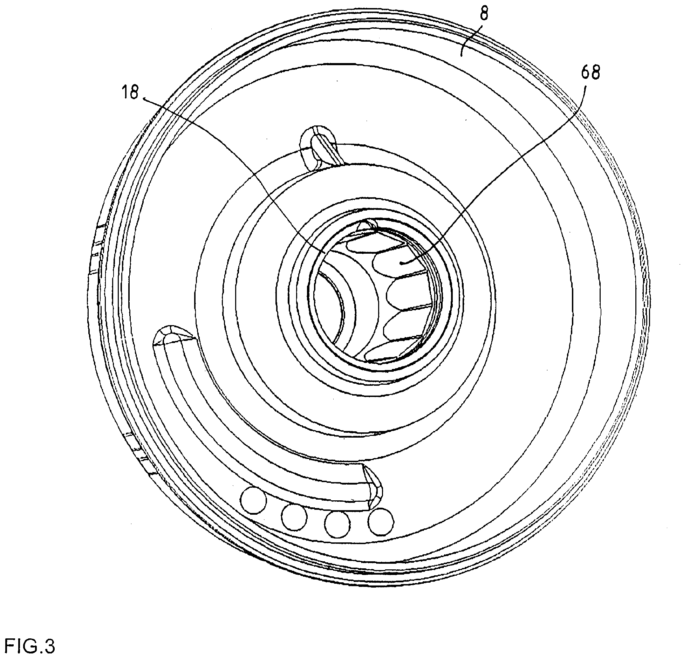

Besonders bevorzugt wird das an dem Außenumfang der Zwischenbuchse 64 in Umfangsrichtung umlaufende Außenmehrkantprofil 66 und das komplementär ausgebildete umlaufende Innenmehrkantprofil 68 am Innenumfang des Federspeicherbremskolbenrohrs 18 durch ein Zwölfkantprofil gebildet. Insbesondere ist das Zwölfkantprofil 68 mit dem Federspeicherbremskolbenrohr 18 einstückig ausgeführt, wie aus der Einzeldarstellung des Federspeicherbremskolbens 18 von Fig.3 hervorgeht. Diese perspektivische Ansicht zeigt den Federspeicherbremskolben 8 zusammen mit dem Federspeicherbremskolbenrohr 18 bezogen auf Fig.1 von links, d.h. von dem Boden des Federspeicherbremszylinders 4 bzw. der dort gehaltenen Buchse 54 gesehen aus. Dabei ist das Federspeicherbremskolbenrohr 18 mit dem Federspeicherbremskolben 8 beispielsweise einstückig ausgeführt.

Weiterhin wird das am Außenumfang der Mutter 56 in Umfangsrichtung umlaufende Außenmehrkantprofil 60 und das komplementär ausgebildete umlaufende Innenmehrkantprofil 62 am Innenumfang der Zwischenbuchse beispielsweise durch ein Sechskantprofil gebildet

Die Zwischenbuchse 64, welche bevorzugt aus Kunststoff wie Polyamid besteht, ist in dem Federspeicherbremskolbenrohr 18 axialfest gehalten, hier beispielsweise zwischen der Scheibe 58, die auch den axialen Anschlag für die Mutter 56 bildet und dem Entlüftungsventil 16 am Boden des Federspeicherbremskolbenrohrs 18. Die Zwischenbuchse 64 weist wenigstens eine axiale Länge auf, welche wenigstens so lang wie die maximale Relativbewegung zwischen der Mutter 56 und dem Federspeicherbremskolbenrohr 18 bzw. wie der axiale Schraubbereich der Mutter 56 auf der Gewindespindel 50 ist, damit die Mutter 56 in jeder Lage bzw. in jeder Schraublage auf der Gewindespindel 50 drehfest gehalten werden kann.

### Bezugszeichenliste

- 1: Betriebsbrems- und Federspeicher
- 2: Betriebsbremszylinder
- 4: Federspeicherbremszylinder
- 6: Zwischenwand
- 8: Federspeicherbremskolben
- 10: Speicherfeder
- 12: Federspeicherbremskammer
- 14: Federkammer
- 16: Entlüftungsventil
- 18: Federspeicherbremskolbenrohr
- 20: Betriebsbremskammer
- 21: Bohrung
- 22: Dichtungsanordnung
- 24: Membrane
- 26: Membranteller
- 28: Druckstange
- 30: Rückholfeder
- 31: Federkammer
- 32: Befestigungsrand
- 34: Aufnahme
- 36: Flansch
- 38: Flansch
- 40: Zentrierring
- 42: radial innere Umfangsfläche
- 44: Wandung
- 46: Zylinderachse
- 48: Werkzeugansatzfläche
- 50: Gewindespindel
- 52: Notlöseeinrichtung
- 54: Buchse
- 56: Mutter
- 58: Anschlag
- 60: Außenmehrkantprofil
- 62: Innenmehrkantprofil
- 64: Zwischen buche
- 66: Außenmehrkantprofil
- 68: Innenmehrkantprofil

## Patentansprüche

1. Pneumatischer Federspeicherbremszylinder (4) für Bremsanlagen von Fahrzeugen mit einem Gehäuse, in dem ein durch wenigstens eine Speicherfeder (10) belasteter, mit einem Federspeicherbremskolbenrohr (18) verbundener Federspeicherbremskolben (8) beweglich geführt ist, sowie mit einer Notlöseeinrichtung (52) zum Notlösen des Federspeicherbremskolbens (8) bei Druckausfall, welche eine gegenüber dem Federspeicherbremszylinder (4) drehbare Spindel (50) beinhaltet, welche in einer im Federspeicherbremskolbenrohr (18) durch Formschluss drehfest gehaltenen Mutter (56) verschraubbar ist, die mit einem axialen Anschlag (58) am Federspeicherbremskolben (8) zusammenwirkt, um eine Lösebewegung des Federspeicherbremskolbens (8) gegen die Wirkung der wenigstens einen Speicherfeder (10) hervorzurufen, **dadurch gekennzeichnet, dass** der Formschluss einerseits zwischen einem am Außenumfang der Mutter (56) in Umfangsrichtung umlaufenden Außenmehrkantprofil (60) und einem komplementär ausgebildeten umlaufenden Innenmehrkantprofil (62) am Innenumfang einer Zwischenbuchse (64) und andererseits durch an dem Außenumfang der Zwischenbuchse (64) in Umfangsrichtung umlaufendes Außenmehrkantprofil (66) und einem komplementär ausgebildeten umlaufenden Innenmehrkantprofil (68) am Innenumfang des Federspeicherbremskolbenrohrs (18) gebildet wird.

2. Federspeicherbremszylinder nach Anspruch 1, **dadurch gekennzeichnet, dass** die Zwischenbuchse (64) aus Polyamid, insbesondere aus glasfaserverstärktem Polyamid besteht.

3. Federspeicherbremszylinder nach Anspruch 1 oder 2, **dadurch gekennzeichnet, dass** die Spindel (50) eine Gewindespindel mit Außengewinde ist, welches mit einem Innengewinde einer in einem Boden des Gehäuses des Federspeicherbremszylinders (8) ausgebildeten Durchgangsbohrung zusammen wirkt, um die Gewindespindel (50) in das Gehäuse ein- und auszuschrauben.

4. Federspeicherbremszylinder nach Anspruch 1 oder 2, **dadurch gekennzeichnet, dass** die Spindel (50) drehbar, aber axialfest in dem Boden des Gehäuses gehalten ist.

5. Federspeicherbremszylinder nach einem der vorhergehenden Ansprüche, **dadurch gekennzeichnet, dass** das an dem Außenumfang der Zwischenbuchse (64) in Umfangsrichtung umlaufende Außenmehrkantprofil (66) und das komplementär ausgebildete umlaufende Innenmehrkantprofil (68) am Innenumfang des Federspeicherbremskolbenrohrs (18) jeweils durch ein Zwölfkantprofil gebildet wird.

6. Federspeicherbremszylinder nach Anspruch 5, **dadurch gekennzeichnet, dass** das Zwölfkantprofil mit dem Federspeicherbremskolbenrohr (18) einstückig ausgeführt ist.

7. Federspeicherbremszylinder nach einem der vorhergehenden Ansprüche, **dadurch gekennzeichnet, dass** das am Außenumfang der Mutter (56) in Umfangsrichtung umlaufende Außenmehrkantprofil (60) und das komplementär ausgebildete umlaufende Innenmehrkantprofil (62) am Innenumfang der Zwischenbuchse (64) durch ein Sechskantprofil gebildet wird.

8. Federspeicherbremszylinder nach einem der vorhergehenden Ansprüche, **dadurch gekennzeichnet, dass** die Zwischenbuchse (64) in dem Federspeicherbremskolbenrohr (18) axialfest gehalten ist.

9. Federspeicherbremszylinder nach einem der vorhergehenden Ansprüche, **dadurch gekennzeichnet, dass** die Zwischenbuchse (64) wenigstens eine axiale Länge aufweist, welche dem axialen Schraubbereich der Mutter (56) auf der Gewindespindel (50) entspricht.

10. Federspeicherbremszylinder nach einem der vorhergehenden Ansprüche, **dadurch gekennzeichnet, dass** das an dem Außenumfang der Zwischenbuchse (64) in Umfangsrichtung umlaufende Außenmehrkantprofil (66) und das komplementär ausgebildete umlaufende Innenmehrkantprofil (68) am Innenumfang des Federspeicherbremskolbenrohrs (18) sich im wesentlichen über die gesamte axiale Länge der Zwischenbuchse (64) erstrecken.

11. Federspeicherbremszylinder nach einem der vorhergehenden Ansprüche, **dadurch gekennzeichnet, dass** der axiale Anschlag (58) für die Mutter (56) durch eine Scheibe gebildet wird, welche in dem Federspeicherbremskolbenrohr (18) gehalten ist.

12. Federspeicherbremszylinder nach einem der Ansprüche 1 bis 10, **dadurch gekennzeichnet, dass** der axiale Anschlag (58) für die Mutter (56) am Federspeicherbremskolbenrohr (18) einstückig ausgebildet ist.

13. Kombinierter Betriebsbrems- und Federspeicherbremszylinder (1) für Bremsanlagen von Fahrzeugen, mit einem Federspeicherbremszylinder (4) nach einem der vorhergehenden Ansprüche.

## Claims

1. Pneumatic spring brake cylinder (4) for brake systems of vehicles having a housing, in which a spring brake piston (8) which is loaded by way of at least one accumulator spring (10) and is connected to a spring brake piston tube (18) is guided movably, and having an emergency release device (52) for emergency releasing the spring brake piston (8) if the pressure fails, which emergency release device (52) contains a spindle (50) which can be rotated with respect to the spring brake cylinder (4) and can be screwed into a nut (56) which is held fixedly in the spring brake piston tube (18) so as to rotate with it by way of a positively locking connection and interacts with an axial stop (58) on the spring brake piston (8), in order to cause a releasing movement of the spring brake piston (8) counter to the action of the at least one accumulator spring (10), **characterized in that** the positively locking connection is formed firstly between an external polygonal profile (60) which runs around in the circumferential direction on the outer circumference of the nut (56) and a circumferential internal polygonal profile (62) of complementary configuration on the inner circumference of an intermediate bush (64) and secondly by way of an external polygonal profile (66) which runs around in the circumferential direction on the outer circumference of the intermediate bush (64) and a circumferential internal polygonal profile (68) of complementary configuration on the inner circumference of the spring brake piston tube (18).

2. Spring brake cylinder according to Claim 1, **characterized in that** the intermediate bush (64) consists of polyamide, in particular of glass fiber-reinforced polyamide.

3. Spring brake cylinder according to Claim 1 or 2, **characterized in that** the spindle (50) is a threaded spindle with an external thread which interacts with an internal thread of a through bore which is configured in a bottom of the housing of the spring brake cylinder (8), in order to screw the threaded spindle (50) into and out of the housing.

4. Spring brake cylinder according to Claim 1 or 2, **characterized in that** the spindle (50) is held in a rotatable but axially fixed manner in the bottom of the housing.

5. Spring brake cylinder according to one of the preceding claims, **characterized in that** the external polygonal profile (66) which runs around in the circumferential direction on the outer circumference of the intermediate bush (64) and the circumferential internal polygonal profile (68) of complementary configuration on the inner circumference of the spring brake piston tube (18) are formed in each case by way of a double-hex profile.

6. Spring brake cylinder according to Claim 5, **characterized in that** the double-hex profile is configured in one piece with the spring brake piston tube (18).

7. Spring brake cylinder according to one of the preceding claims, **characterized in that** the external polygonal profile (60) which runs around in the circumferential direction on the outer circumference of the nut (56) and the circumferential internal polygonal profile (62) of complementary configuration on the inner circumference of the intermediate bush (64) are formed by way of a hexagonal profile.

8. Spring brake cylinder according to one of the preceding claims, **characterized in that** the intermediate bush (64) is held in an axially fixed manner in the spring brake piston tube (18).

9. Spring brake cylinder according to one of the preceding claims, **characterized in that** the intermediate bush (64) has at least an axial length which corresponds to the axial screwing region of the nut (56) on the threaded spindle (50).

10. Spring brake cylinder according to one of the preceding claims, **characterized in that** the external polygonal profile (66) which runs around in the circumferential direction on the outer circumference of the intermediate bush (64) and the circumferential internal polygonal profile (68) of complementary configuration on the inner circumference of the spring brake piston tube (18) extend substantially over the entire axial length of the intermediate bush (64).

11. Spring brake cylinder according to one of the preceding claims, **characterized in that** the axial stop (58) for the nut (56) is formed by way of a disk which is held in the spring brake piston tube (18).

12. Spring brake cylinder according to one of Claims 1 to 10, **characterized in that** the axial stop (58) for the nut (56) is configured in one piece on the spring brake piston tube (18).

13. Combined service brake and spring brake cylinder (1) for brake systems of vehicles, having a spring brake cylinder (4) according to one of the preceding claims.

## Revendications

1. Cylindre de frein (4) pneumatique à ressort accumulateur pour des systèmes de freinage de véhicules, comprenant une enveloppe, dans laquelle est guidé en étant mobile un piston (8) de frein à ressort accumulateur, soumis à l'action du au moins un ressort (10) accumulateur et relié à un tube (18) de piston de frein à ressort accumulateur, ainsi qu'un dispositif (52) de desserrage d'urgence pour relâcher d'urgence le piston (8) de frein à ressort accumulateur, s'il se produit une chute de pression, et qui comporte une broche (50) qui peut tourner par rapport au cylindre de frein (4) à ressort accumulateur et qui peut se visser dans un écrou (56), maintenu solidaire en rotation par complémentarité de forme, dans le tube (18) de piston de frein à ressort accumulateur, écrou qui coopère avec une butée (58) axiale du piston (8) du frein à ressort accumulateur, pour provoquer un mouvement de relâchement du piston (8) de frein à ressort accumulateur à l'encontre de l'effet d'au moins un ressort (10) accumulateur, **caractérisé en ce que** la complémentarité de forme est formée, d'une part, entre un profil (60) extérieur polygonal, faisant le tour dans la direction périphérique du pourtour extérieur de l'écrou (56), et un profil (62) intérieur polygonal faisant le tour et constitué de manière complémentaire sur le pourtour intérieur d'une douille (64) intermédiaire et, d'autre part, par un profil (66) extérieur polygonal, faisant le tour du pourtour extérieur de la douille (64) intermédiaire, et un profil (68) intérieur polygonal faisant le tour et constitué de manière complémentaire sur le pourtour intérieur du tube (18) du piston de frein à ressort accumulateur.

2. Cylindre de frein à ressort accumulateur suivant la revendication 1, **caractérisé en ce que** la douille (64) intermédiaire est en polyamide, notamment en polyamide renforcé par de la fibre de verre.

3. Cylindre de frein à ressort accumulateur suivant la revendication 1 ou 2, **caractérisé en ce que** la broche (50) est une broche filetée à filetage extérieur, qui coopère avec un taraudage d'un trou traversant, constitué dans un fond de l'enveloppe du cylindre (8) de frein à ressort accumulateur, pour visser et dévisser la broche (50) filetée dans l'enveloppe.

4. Cylindre de frein à ressort accumulateur suivant la revendication 1 ou 2, **caractérisé en ce que** la broche (50) est maintenue tournante mais fixe axialement dans le fond de l'enveloppe.

5. Cylindre de frein à ressort accumulateur suivant l'une des revendications précédentes, **caractérisé en ce que** le profil (66) extérieur polygonal, faisant le tour dans la direction périphérique sur le pourtour extérieur de la douille (64) intermédiaire, et le profil (68) intérieur polygonal faisant le tour et constitué de manière complémentaire sur le pourtour intérieur du tube (18) du piston du frein à ressort accumulateur, sont formés respectivement par un profil à douze pans.

6. Cylindre de frein à ressort accumulateur suivant la revendication 5, **caractérisé en ce que** le profil à douze pans est réalisé d'une seule pièce avec le tube (18) du piston du frein à ressort accumulateur.

7. Cylindre de frein à ressort accumulateur suivant l'une des revendications précédentes, **caractérisé en ce que** le profil (60) extérieur polygonal, faisant le tour dans la direction périphérique sur le pourtour extérieur de l'écrou (56), et le profil (62) intérieur polygonal faisant le tour et constitué de manière complémentaire sur le pourtour intérieur de la douille (64) intermédiaire, sont formés par un profil à six pans.

8. Cylindre de frein à ressort accumulateur suivant l'une des revendications précédentes, **caractérisé en ce que** la douille (64) intermédiaire est maintenue fixe axialement dans le tube (18) du piston du frein à ressort accumulateur.

9. Cylindre de frein à ressort accumulateur suivant l'une des revendications précédentes, **caractérisé en ce que** la douille (64) intermédiaire a au moins une longueur axiale qui correspond à la partie axiale de vissage de l'écrou (56) sur la broche (50) filetée.

10. Cylindre de frein à ressort accumulateur suivant l'une des revendications précédentes, **caractérisé en ce que** le profil (66) extérieur polygonal, faisant le tour dans la direction périphérique sur le pourtour extérieur de la douille (64) intermédiaire, et le profil (68) intérieur polygonal, faisant le tour et constitué de manière complémentaire sur le pourtour intérieur du tube (18) du piston du frein à ressort accumulateur, s'étendent sensiblement sur toute la longueur axiale de la douille (64) intermédiaire.

11. Cylindre de frein à ressort accumulateur suivant l'une des revendications précédentes, **caractérisé en ce que** la butée (58) axiale pour l'écrou (56) est formée d'une rondelle, qui est maintenue dans le tube (18) du piston du frein à ressort accumulateur.

12. Cylindre de frein à ressort accumulateur suivant l'une des revendications 1 à 10, **caractérisé en ce que** la butée (58) axiale pour l'écrou (56) est constituée d'une seule pièce sur le tube (18) du piston du frein à ressort accumulateur.

13. Cylindre (1) combiné de frein de service et de frein à ressort accumulateur pour des systèmes de freinage de véhicules, comprenant un cylindre de frein (4) à ressort accumulateur suivant l'une des revendications précédentes.
